# FASCICULE DE BREVET EUROPEEN

(11) **EP 2 176 076 B1**
(45) Date de publication et mention de la délivrance du brevet: **19.01.2011**
(21) Numéro de dépôt: 08773786.2
(22) Date de dépôt: 01.07.2008
(51) Int. Cl.: B60C 23/04

(54) **UNITÉ ÉLECTRONIQUE DE MESURE DE PARAMÈTRES DE FONCTIONNEMENT D'UNE ROUE DE VÉHICULE, COMPRENANT UN BOÎTIER ÉLECTRONIQUE ET UNE VALVE DE GONFLAGE DE TYPE SNAP-IN**
ELEKTRONISCHE EINHEIT ZUR MESSUNG DER BETRIEBSPARAMETER EINES FAHRZEUGREIFENS MIT EINEM ELEKTRONISCHEN MODUL UND EINEM AUFBLASSTECKVENTIL
ELECTRONIC UNIT FOR MEASURING THE OPERATING PARAMETERS OF A VEHICLE WHEEL, COMPRISING AN ELECTRONIC MODULE AND A SNAP-IN TYPE INFLATION VALVE

(30) Priorité: 06.07.2007 FR 0704914
(43) Date de publication de la demande: 21.04.2010
(73) Titulaire: Continental Automotive France, 31100 Toulouse (FR)
(72) Inventeur: GORY, Francois, F-31170 Tournefeuille (FR); HILLENMAYER, Franz, 93133 Burglengenfeld (DE); KEMPF, Christian, F-31000 Toulouse (FR)
(86) Numéro de dépôt international: PCT/EP2008/005348
(87) Numéro de publication internationale: WO 2009/007035

(56) Documents cités:
- EP-A- 1 736 328
- US-A- 6 005 480
- US-A1- 2006 272 402
- US-A1- 2006 272 758

## Description

L'invention concerne une unité électronique de mesure de paramètres de fonctionnement d'une roue de véhicule, comprenant un boîtier électronique et une valve de gonflage de type « snap-in », permettant de solidariser le dit boîtier électronique sur une jante de roue.

De plus en plus de véhicules automobiles possèdent des systèmes de surveillance et/ou de mesures de paramètres comportant des capteurs.

A titre d'exemple concernant de tels systèmes, il peut être cité les systèmes de surveillance de la pression des pneus comportant des boîtiers électroniques montés sur chacune des roues de véhicules, dédiés à la mesure de paramètres, tels que pression et/ou température des pneumatiques équipant ces roues, et destinés à informer le conducteur de toute variation anormale du paramètre mesuré.

Une des solutions actuelles, la plus couramment utilisée, pour assurer la fixation des boîtiers électroniques sur les jantes des roues consiste à réaliser des unités électroniques composées chacune d'un boîtier électronique et d'une valve de gonflage assemblée avec le dit boîtier électronique. La valve de gonflage permet également de solidariser le boîtier électronique sur la jante de la roue.

Une première solution concernant de telles unités électroniques consiste à réaliser des valves de gonflage spécifiques aptes à assurer la transmission des efforts auxquels sont soumis les boîtiers électroniques. Toutefois, cette solution s'avère onéreuse car, outre le prix élevé des valves de gonflage, généralement entièrement métalliques, elle nécessite la réalisation de pièces annexes (écrous, joints d'étanchéité...) spécialement conçues pour garantir une fixation étanche des valves de gonflage sur les jantes.

En vue de pallier cet inconvénient, une seconde solution a consisté à réaliser des valves de gonflage de même conception de base que les valves de gonflage classiques de type « snap-in », modifiées de façon à assurer la reprise des efforts auxquels sont soumis les boîtiers électroniques.

Cette solution a notamment abouti à la réalisation d'une unité électronique telle que décrite dans les brevets US 6,005,480 et EP 1911 610 B1 comprenant une valve de gonflage de type « snap-in » comportant :
- un corps de valve en un matériau élastomère, muni d'un alésage axial longitudinal et destiné à s'étendre au travers d'un orifice ménagé dans une jante, le dit corps de valve étant composé d'un tronc déformable élastiquement et d'une tête de butée contre la jante séparée du tronc par un col adapté pour se positionner de façon étanche dans l'orifice ménagé dans la dite jante,
- et une âme tubulaire creuse en un matériau rigide, logeant un mécanisme d'obturation et de dimensions adaptées pour se loger dans l'alésage du corps de valve et s'étendre de part et d'autre dans le prolongement du dit corps de valve, la dite âme tubulaire étant constituée de deux tronçons longitudinaux agencés l'un par rapport à l'autre et relativement au corps de valve, de façon à autoriser une déformation élastique du tronc apte à permettre le montage de la valve de gonflage au travers de l'orifice de la jante.

De plus, l'unité électronique comporte des moyens de solidarisation du boîtier électronique et de la valve de gonflage adaptés pour assurer une fixation du dit boîtier électronique sur la portion de l'âme tubulaire de la valve de gonflage s'étendant dans le prolongement de la tête de butée du corps de valve.

Selon ce principe, l'âme tubulaire logée dans le corps de valve est conçue pour assurer la reprise des efforts auxquels sont soumis les boîtiers électroniques solidarisés sur cette dernière, et les modifications apportées aux valves de gonflage classiques de type « snap-in » en vue de l'obtention de ce résultat sont minimes et donc peu coûteuses.

Par contre, il s'avère que cette conception conduit à une limitation importante des performances, en termes d'étanchéité et de longévité, des valves de gonflage.

En effet, la conception des moyens de solidarisation du boîtier électronique et de la valve de gonflage qui conduit à solidariser le boîtier électronique sur l'âme tubulaire de la valve de gonflage, impose de ménager un espace libre entre la tête de butée du corps de valve et le dit boîtier électronique : un tel espace libre est, en effet, obligatoire pour autoriser, lors du montage de la valve de gonflage équipée d'un boîtier électronique, les déformations axiale et radiale du tronc du corps de valve permettant son introduction et son passage dans l'orifice de la jante.

Or, un tel espace libre conduit à décaler de façon notable la position du centre de gravité de l'ensemble valve de gonflage / boîtier électronique par rapport à la position du centre de gravité d'une valve de gonflage seule, et par voie de conséquence, conduit à modifier les zones de surface de la valve de gonflage assurant l'étanchéité, et à augmenter les contraintes subies au niveau des zones de contact entre la valve de gonflage et la jante.

Dans la pratique, ces modifications et augmentations des sollicitations auxquelles sont soumises les valves de gonflage, conduisent, tel que précité, à une limitation importante des performances, en termes d'étanchéité et de longévité, des dites valves de gonflage.

La présente invention vise à pallier ces inconvénients et a pour objectif principal de fournir une unité électronique conçue pour que les sollicitations auxquelles sont soumises les valves de gonflage soient similaires à celles sollicitant une valve de gonflage dépourvue de boîtier électronique.

A cet effet, l'invention vise une unité électronique comprenant un boîtier électronique, une valve de gonflage de type « snap-in » telle que décrite plus haut, et des moyens de solidarisation du boîtier électronique et de la valve de gonflage comprenant :
- une bague solidaire du boîtier électronique, adaptée pour être montée coulissante autour de la portion de l'âme tubulaire s'étendant dans le prolongement de la tête de butée du corps de valve, dans une position du boîtier électronique où ce dernier s'étend dans le prolongement direct de la valve de gonflage,
- et des moyens d'assemblage de la bague du boîtier électronique sur la tête de butée du corps de valve.

Selon l'invention, et en premier lieu, les efforts sollicitant le boîtier électronique sont transmis, par l'intermédiaire de la bague, vers l'âme tubulaire de la valve de gonflage qui s'avère ainsi conçue pour assurer la rigidité de la dite valve de gonflage.

De plus, le boîtier électronique est :
- assemblé directement sur la tête de butée du corps de valve (sans espace libre), de sorte que la position du centre de gravité de l'ensemble valve de gonflage / boîtier électronique est optimisée quelle que soit l'épaisseur de la jante,
- monté coulissant relativement à l'âme tubulaire de façon à autoriser les débattements relatifs de ces deux éléments lors du montage de la valve de gonflage sur une jante, sans nécessiter d'espace libre.

Du fait de ces spécificités, et dans la pratique, l'unité électronique selon l'invention permet de garantir un comportement de la valve de gonflage similaire à celui d'une valve de gonflage de type « snap-in » traditionnelle.

Selon un premier mode de mise en oeuvre avantageux de l'invention, l'âme tubulaire de la valve de gonflage est constituée de deux tronçons longitudinaux solidarisés dans le prolongement l'un de l'autre au niveau du col du corps de valve :
- un premier tronçon longitudinal solidarisé au corps de valve à l'intérieur de l'alésage de ce dernier, s'étendant dans le tronc du dit corps de valve et dans le prolongement du dit tronc,
- et un second tronçon longitudinal libre en translation à l'intérieur de l'alésage du corps de valve, s'étendant dans la tête de butée du dit corps de valve et dans le prolongement de la dite tête de butée.

De plus, le second tronçon longitudinal de l'âme tubulaire présente alors, avantageusement, un diamètre externe inférieur à celui du premier tronçon longitudinal de la dite âme tubulaire, adapté pour obtenir une solidarisation par emmanchement des dits tronçons longitudinaux.

En outre, l'alésage du corps de valve présente avantageusement, à l'intérieur de la tête de butée, une section interne de dimensions adaptées pour ménager un espace annulaire autour du second tronçon longitudinal de l'âme tubulaire, autorisant les débattements (coulissement) entre ce dernier et la tête de butée.

Par ailleurs, les moyens d'assemblage de la bague du boîtier électronique sur la tête de butée du corps de valve comprennent avantageusement, selon l'invention :
- un manchon creux solidaire de la bague du boîtier électronique, adapté pour pénétrer dans un espace annulaire ménagé dans la tête de butée autour de l'âme tubulaire,
- et des organes conjugués de blocage relatif en translation de la bague relativement au corps de valve, ménagés sur le manchon et formés dans l'espace annulaire ménagé dans la tête de butée.

Selon ce mode de réalisation, les moyens d'assemblage peuvent comporter des organes de blocage en translation consistant en une gorge annulaire formée dans l'espace annulaire ménagé dans la tête de butée, et en une nervure annulaire de forme conjuguée de la dite gorge, ménagée sur le manchon de la bague.

Ces moyens d'assemblage peuvent également comporter des organes de blocage consistant en une nervure annulaire faisant saillie à l'intérieur de l'espace annulaire ménagé dans la tête de butée, et en un organe de blocage ménagé sur le manchon de la bague, le dit manchon présentant, en outre, alors une faculté de déformation radiale, par exemple conférée par des fentes longitudinales s'étendant à partir de son extrémité, apte à permettre le franchissement, par l'organe de blocage de ce manchon, de la nervure annulaire disposée dans l'espace annulaire.

Egalement basé sur le même principe, les moyens d'assemblage peuvent comprendre, selon une autre variante avantageuse de réalisation :
- une chambre annulaire ménagée sur le pourtour de l'alésage longitudinal au niveau du col du corps de valve, adaptée pour délimiter, au niveau du dit col, une épaisseur de matière conçue pour entraîner, par repoussage (fluage) de matière, un remplissage partiel de la dite chambre annulaire, sous l'effet de la force exercée par une jante, lors du montage sur cette dernière du dit corps de valve,
- un manchon présentant une longueur adaptée pour que l'organe de blocage en translation du dit manchon s'étende dans la chambre annulaire de façon à être bloqué en translation lors du repoussage de matière.

Quelle que soit la conception des organes de blocage relatif en rotation ménagés sur le manchon, ce dernier peut également être avantageusement utilisé en vue de bloquer en rotation le boîtier électronique par rapport au corps de valve. Ce résultat peut, en effet, être avantageusement obtenu, selon l'invention, au moyen d'organes conjugués de blocage relatif en rotation de la bague relativement au corps de valve, ménagés sur le manchon et sur l'âme tubulaire.

Par ailleurs, afin d'assurer un verrouillage de l'assemblage de la bague du boîtier électronique sur la tête de butée du corps de valve, cette tête de butée comporte avantageusement un logement annulaire externe de positionnement d'un organe de serrage de la dite tête de butée sur le manchon de la bague du boîtier électronique.

Selon un autre mode de réalisation avantageux destiné également à assurer le verrouillage de l'assemblage, la tête de butée du corps de valve et la bague du boîtier électronique comportent des réservations complémentaires aptes à loger un organe de clavetage des dites tête de butée et bague.

Selon un autre mode de mise en oeuvre avantageux de l'invention, le boîtier électronique et la bague sont agencés de façon que le dit boîtier électronique soit incliné d'un angle de l'ordre de 10° à 40° par rapport à l'axe longitudinal du corps de valve. Une telle inclinaison permet de maintenir les boîtiers électroniques sensiblement au contact du fond des jantes (pour un large panel de jantes existantes sur le marché) et de limiter ainsi les contraintes subies.

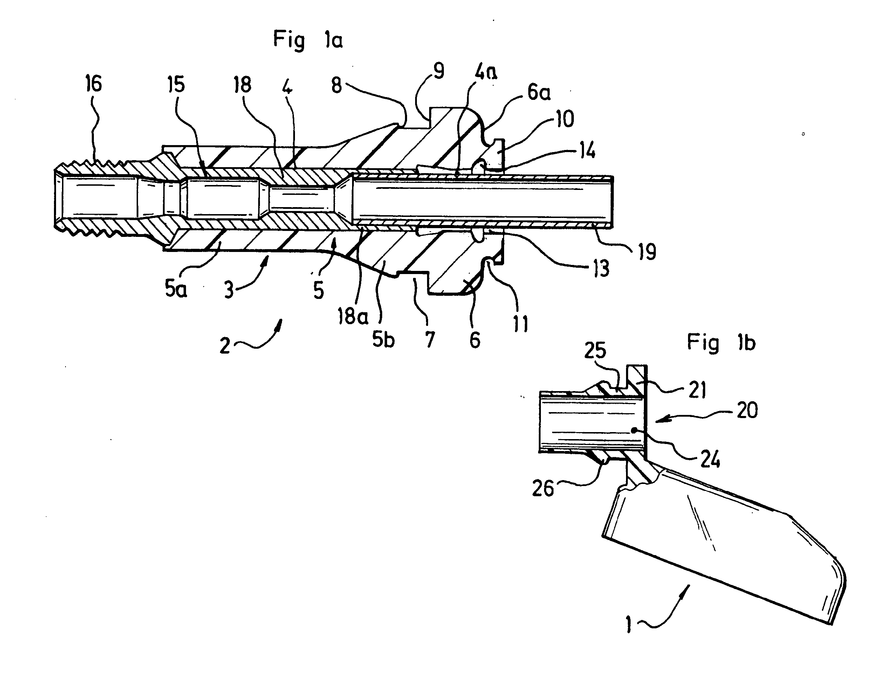

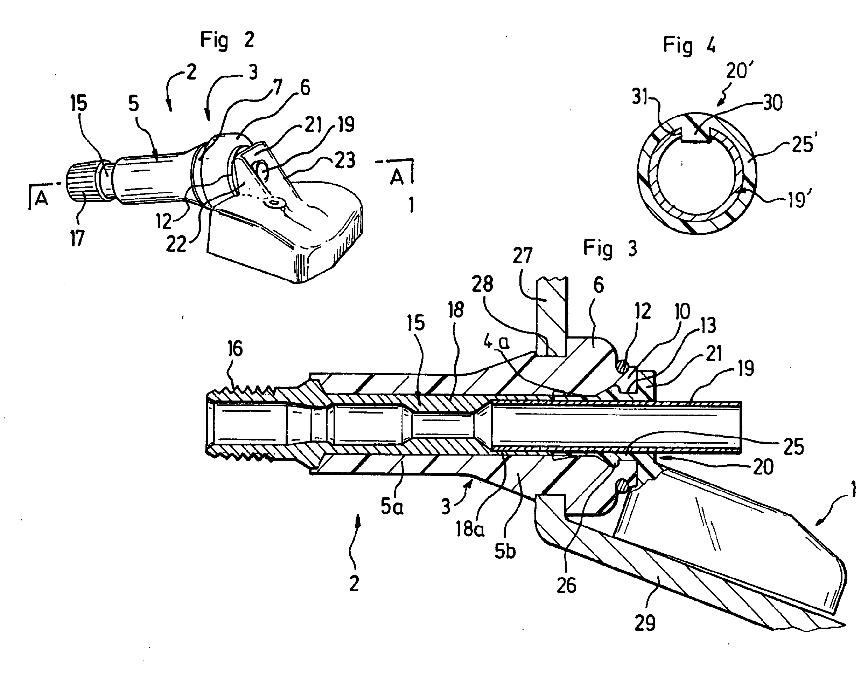

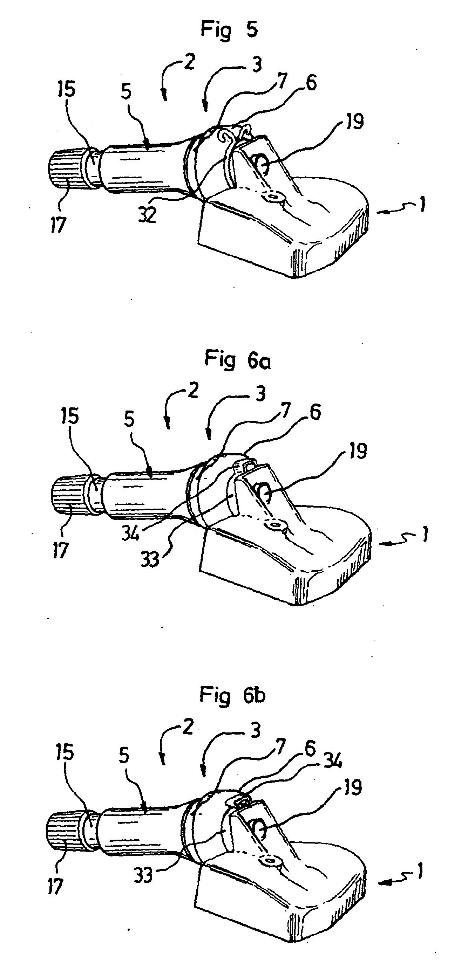

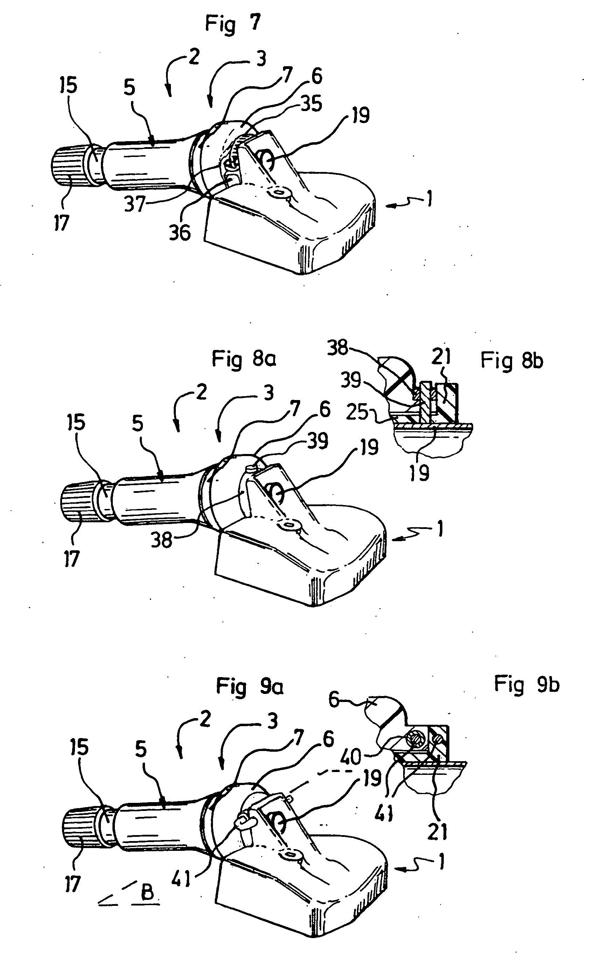

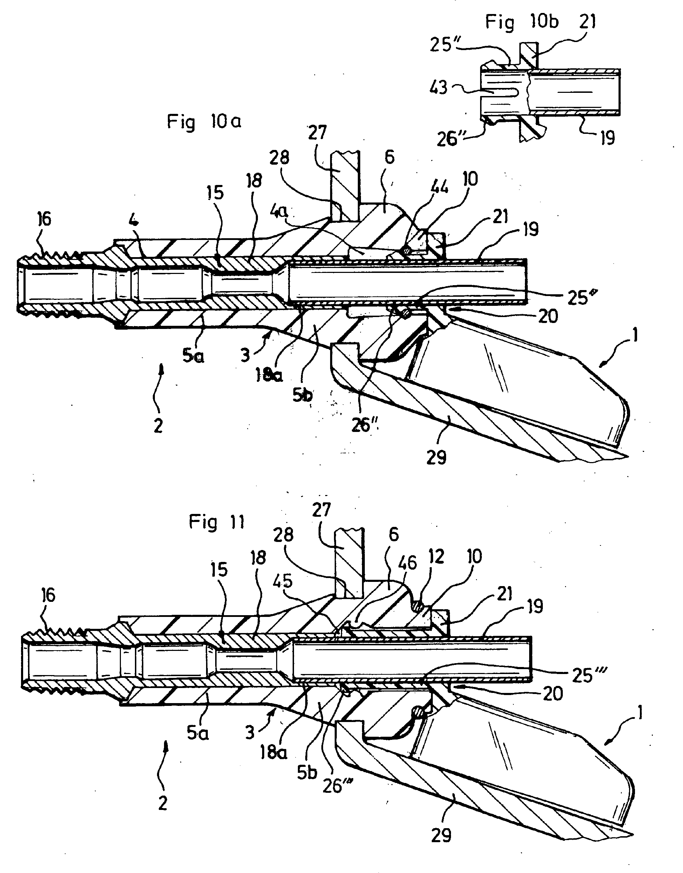

D'autres caractéristiques buts et avantages de l'invention ressortiront de la description détaillée qui suit en référence aux dessins annexés qui en représentent à titres d'exemples non limitatifs un mode de réalisation préférentiel ainsi que huit variantes de réalisation relatifs aux moyens d'assemblage et de verrouillage de la bague du boîtier électronique et de la tête de butée du corps de valve. Sur ces dessins :
- **la** **figure 1a** est une coupe longitudinale par un plan axial A de la figure 2, représentant une valve de gonflage conforme à l'invention,
- **la** **figure 1b** est une vue longitudinale, partiellement en coupe par le plan longitudinal A, d'un boîtier électronique selon l'invention,
- **la** **figure 2** est une vue en perspective d'une unité électronique selon l'invention,
- **la** **figure 3** est une vue longitudinale partiellement en coupe par le plan axial A représentant cette unité électronique montée sur une jante de roue,
- **la** **figure 4** est une coupe transversale représentant une variante de réalisation de la bague de l'unité électronique selon l'invention,
- l**a** **figure 5** est une vue en perspective d'une unité électronique selon l'invention comportant une première variante d'organe de verrouillage de l'assemblage de la valve de gonflage et du boîtier électronique,
- **les** **figures 6a et 6b** sont deux vues en perspective d'une unité électronique selon l'invention comportant une deuxième variante d'organe de verrouillage de l'assemblage de la valve de gonflage et du boîtier électronique, représenté avant sertissage (figure 6a) et après sertissage (figure 6b),
- **la** **figure 7** est une vue en perspective d'une unité électronique selon l'invention comportant une troisième variante d'organe de verrouillage de l'assemblage de la valve de gonflage et du boîtier électronique,
- **la** **figure 8a** est une vue en perspective d'une unité électronique selon l'invention comportant une quatrième variante d'organes de verrouillage de l'assemblage de la valve de gonflage et du boîtier électronique,
- **la** **figure 8b** est une coupe longitudinale partielle par le plan A de l'unité électronique selon la figure 8a,
- **la** **figure 9a** est une vue en perspective d'une unité électronique selon l'invention comportant une cinquième variante d'organes de verrouillage de l'assemblage de la valve de gonflage et du boîtier électronique,
- **la** **figure 9b** est une coupe longitudinale partielle par un plan longitudinal B de l'unité électronique selon la figure 9a,
- **la** **figure 10a** est une vue longitudinale partiellement en coupe par le plan A représentant une unité électronique dotée d'une première variante de moyens d'assemblage du boîtier électronique et du corps de valve, montée sur une jante de roue,
- **la** **figure 10b** est une vue longitudinale partiellement en coupe par le plan A représentant la bague de l'unité électronique selon la figure 10a,
- **et la** **figure 11** est une vue longitudinale partiellement en coupe par le plan A représentant une unité électronique dotée d'une seconde variante de moyens d'assemblage du boîtier électronique et du corps de valve, montée sur une jante de roue.

Les unités électroniques selon l'invention représentées à titre d'exemples aux figures sont destinées à être montées sur des roues de véhicules en vue de la mesure de paramètres de fonctionnement (pression, température, accélération...) des dites roues, et de la transmission des données mesurées vers des unités centrales (non représentées) montées sur les véhicules.

Chacune de ces unités électroniques se compose d'un boîtier électronique 1 (figure 1b) adapté pour être monté à l'intérieur de l'enveloppe d'un pneumatique, et d'une valve de gonflage 2 (figure 1a), de solidarisation de ce dernier sur la jante de la roue équipée de ce pneumatique.

En premier lieu, la valve de gonflage 2 consiste en une valve de gonflage « snap-in » comportant un corps de valve 3 en un matériau élastomère muni axialement d'un alésage longitudinal cylindrique 4.

De façon classique, ce corps de valve 3 se subdivise, en outre, longitudinalement, en un tronc 5 et une tête de butée 6, séparée du tronc 5, par un col 7.

De plus, le tronc 5 est composé de deux tronçons longitudinaux de formes adaptées pour conférer au dit tronc des facultés de déformation élastique longitudinale et radiale : un premier tronçon d'extrémité 5a de plus grande longueur, de forme cylindrique ou légèrement tronconique, et un second tronçon 5b de forme tronconique d'angle au sommet supérieur à celui du premier tronçon 5a.

La tête de butée 6 est quant à elle de forme générale cylindrique et présente, selon l'invention, une face frontale 6a par rapport à laquelle s'étend un embout cylindrique axial 10 de diamètre inférieur à celui de la dite tête de butée, sur la paroi périphérique duquel est ménagé un espace 11 ( consistant en une gorge annulaire selon l'exemple représenté aux figures 1 à 3), apte à loger un anneau élastique 12 (figure 3) du type « Circlip » susceptible de comprimer l'embout cylindrique 10 sur la bague 20, et de verrouiller l'assemblage de la valve de gonflage 2 et du boîtier électronique 1.

Le col 7 de ce corps de valve 3 présente, enfin, la forme d'une rainure annulaire délimitée par deux épaulements 8, 9 de jonction respective avec le tronc 5 et la tête de butée 6.

Le corps de valve 3 comporte, en dernier lieu, selon l'invention, une chambre cylindrique 13 ménagée dans l'embout cylindrique 10, au niveau du débouché de l'alésage 4, à l'intérieur et dans le fond de laquelle est ménagée une gorge annulaire interne 14.

La valve de gonflage 2 comporte, en outre, une âme tubulaire creuse 15 en un matériau rigide, de dimensions adaptées pour se loger dans l'alésage 4 du corps de valve 3 et s'étendre de part et d'autre dans le prolongement du dit corps de valve. Cette âme tubulaire 15 est constituée de deux tronçons longitudinaux distincts 18, 19 solidarisés dans le prolongement l'un de l'autre au niveau du col 7 du corps de valve 3.

Le premier de ces tronçons longitudinaux 18 consiste en une tige cylindrique creuse 18 de type connu en soi, par exemple réalisée en laiton, et destinée notamment à loger le mécanisme d'obturation (non représenté) de la valve de gonflage 2. Cette tige cylindrique 18 est solidarisée au corps de valve 3, à l'intérieur de l'alésage 4 de ce dernier, et s'étend, d'une part, intérieurement, dans le tronc 5 jusqu'au col 7, et extérieurement dans le prolongement du dit tronc. De plus, le tronçon 16 de cette tige cylindrique 18 situé dans le prolongement du corps de valve 3 présente un filetage externe adapté (de manière connue) pour permettre le vissage d'un capuchon de protection 17. Il est à noter en outre que, de façon usuelle, l'adhérence du corps de valve 3 avec la face externe de la tige cylindrique 18 peut être obtenue en réalisant le corps de valve 3 par surmoulage de la dite tige cylindrique.

Selon l'invention, le second tronçon longitudinal 19 de l'âme tubulaire 15 de la valve de gonflage 2 consiste, quant à lui, en un tube cylindrique 19 en un matériau tel que de l'acier présentant, pour une même épaisseur, une résistance supérieure à celle du laiton, le dit tube cylindrique étant solidarisé au tronçon d'extrémité 18a de la tige cylindrique 18 situé dans le col 7, et présentant une longueur adaptée pour s'étendre, intérieurement, dans la tête de butée 6 du corps de valve 3 et, extérieurement, dans le prolongement de la dite tête de butée.

Ce tube cylindrique 19 présente un diamètre externe inférieur à celui du diamètre interne du tronçon d'extrémité 18a de la tige cylindrique 18, adapté pour obtenir une solidarisation par emmanchement en force du dit tube dans le dit tronçon d'extrémité. De plus, ce diamètre est, de fait, inférieur au diamètre de l'alésage 4, de sorte qu'un espace annulaire 4a est ménagé autour du tube cylindrique 19. De ce fait, lors des déformations longitudinales du tronc 5, le tube cylindrique 19, solidaire de la tige cylindrique 18 et donc du tronc 5, possède une liberté de déplacement axial (coulissement) à l'intérieur de la tête de butée 6.

Le boîtier électronique de cette unité électronique se compose, quant à lui, d'un boîtier creux 1 destiné à loger « l'électronique » de l'unité électronique 1, associé à une bague 20 solidaire du dit boîtier électronique, adaptée pour être montée coulissante le long du tronçon du tube cylindrique 19 s'étendant dans le prolongement de la tête de butée 6 du corps de valve 3, dans une position du boîtier électronique 1 où ce dernier s'étend dans le prolongement direct de la valve de gonflage 2.

Cette bague 20 comporte une platine 21, d'une part, agencée par rapport au boîtier électronique 1 de façon que ce dernier soit incliné d'un angle de l'ordre de 10° à 40° par rapport à l'axe longitudinal du corps de valve 3, et d'autre part, dont la liaison avec le dit boîtier électronique est renforcée par deux goussets latéraux 22, 23 (figure 2).

De plus, cette platine 21 est percée d'un orifice circulaire 24 de diamètre conjugué du diamètre externe du tube cylindrique 19, sur le pourtour duquel s'étend un manchon cylindrique 25 de dimensions adaptées, d'une part pour coulisser le long du tube cylindrique 19, et d'autre part, pour s'étendre dans la chambre cylindrique 13 et l'espace annulaire 4a, sensiblement jusqu'au col 7 du corps de valve 3.

Ce manchon 25 est, en outre, doté d'une nervure externe annulaire 26 présentant la forme d'une dent asymétrique, positionnée et adaptée pour se loger dans la gorge annulaire 14 de la chambre cylindrique 13.

Le boîtier électronique 1 et la valve de gonflage 2 de l'unité électronique selon l'invention sont, en premier lieu, assemblés, par introduction du manchon 25 dans l'espace annulaire 4a et la chambre cylindrique 13, et verrouillage de l'assemblage au moyen de l'anneau élastique 12, dans une position où le boîtier électronique 1 s'étend dans le prolongement direct, sans espace libre, de la tête de butée 6 du corps de valve 3, et se trouve incliné d'un angle de l'ordre de 10° à 40° par rapport à l'axe longitudinal du dit corps de valve 3.

L'unité électronique ainsi réalisée peut ensuite être introduite et mise en place dans un orifice 28 (figure 3) ménagé dans une jante 27, grâce aux facultés de déformations radiale et longitudinale du tronc 5 du corps de valve 3.

On notera notamment que la libre déformation des zones du tronc 5 lors du montage de la jante est facilitée par l'existence de l'espace annulaire 4a. Cet espace annulaire 4a permet que l'effort d'insertion d'une valve « snap-in » classique, ou d'une valve « snap-in » modifiée selon la présente invention (c'est-à-dire liée à un boîtier électronique) soit sensiblement le même.

Lors de cette introduction, en outre, le tube cylindrique 19 solidarisé à la tige cylindrique 18 et désolidarisé de la tête de butée 6, ne contrarie en rien les déformations du tronc 5. En outre, pendant cette introduction, la bague 20 coulisse le long du tronçon du tube cylindrique 19.

Par contre, une fois l'unité électronique montée sur la jante 27, ce tube cylindrique 19 joue un rôle primordial de rigidification de la valve de gonflage 3. Cette rigidification est, en outre, accrue par la présence, à l'intérieur de la tête de butée 6, du manchon 25 qui s'étend le long du tube cylindrique 19.

De plus, une fois le montage effectué, la bague 20 reste en contact direct (sans espace libre) avec la tête de butée 6. De ce fait, la position du centre de gravité de l'ensemble valve de gonflage 3 boîtier électronique 1 est optimisée grâce à l'absence d'espace entre ces deux éléments, et l'unité électronique selon l'invention permet de garantir un comportement de la valve de gonflage 1 similaire à celui d'une valve de gonflage de type « snap-in » traditionnelle.

Enfin, l'inclinaison du boîtier électronique 1 permet, en outre, de maintenir le dit boîtier électronique sensiblement au contact de la gorge 29 que forme le fond de la jante 27, et de limiter ainsi les contraintes subies.

Il est également à noter que l'unité électronique selon l'invention ci-dessus décrite est conçue de façon à permettre une séparation de la valve de gonflage 2 et du boîtier électronique 1, notamment après retrait de l'anneau élastique 12, en vue de la récupération du boîtier électronique 1 lors d'un changement de valve de gonflage 2.

Une variante de réalisation du tube cylindrique 19 est illustrée à la figure 4. Selon cette variante de réalisation, le tube cylindrique 19' est réalisé sous la forme d'une goupille élastique. Ainsi le tube cylindrique 19' présente une fente longitudinale 31. Son introduction dans la tige cylindrique 18 ne se fait pas avec un emmanchement à force comme précédemment illustré, mais en resserrant le tube 19' sur lui-même afin de le mettre en place dans la tige 18. On évite ainsi, notamment de créer des copeaux de matière lors de l'emmanchement dans la tige cylindrique 18, qui doit rester exempte de toutes excroissances, puisqu'elle sert de passage d'air. Cette goupille élastique 19' (ou tout autre élément élastique analogue) est mise en place dans la tige 18 sans créer de contraintes et en évitant toute dégradation issue du frottement entre la tige 18 et le tube (goupille élastique) 19'. Ceci permet de ne pas dégrader l'étanchéité à l'air de cette zone.

On notera que cet élément élastique (goupille 19') est précontraint au moment de son introduction dans la tige 18, ce qui permet de garantir une rétention acceptable de ces deux pièces l'une dans l'autre.

Comme cela est représenté à la figure 4, la bague 20' peut alors avantageusement être modifiée et présenter au niveau du manchon 25' une clavette interne 30 adaptée pour coopérer avec la fente 31 de la goupille élastique 19'. Ce faisant, la coopération de la clavette 30 et de la fente 31 de la goupille permet de bloquer en rotation la goupille 19' par rapport à la bague 20' et au corps de valve 3.

Les figures 5, 6a-6b, 7, 8a-8b et 9a-9b représentent cinq variantes de réalisation d'organes de verrouillage de l'assemblage de la valve de gonflage 2 et du boîtier électronique 1, aptes à permettre, en outre, de séparer à la demande ces deux éléments.

Selon le mode de réalisation représenté à la figure 5, le verrouillage est assuré au moyen d'un anneau ressort ouvert 32 présentant en l'exemple la forme générale d'une « lyre », adapté pour être mis en place dans une gorge annulaire 11 telle que décrite ci-dessus.

Selon le mode de réalisation représenté aux figures 6a et 6b, le verrouillage est assuré au moyen d'un collier de sertissage 33 (connu sous les appellations anglaises « ear-clamp » ou « O-clamp ») doté d'une zone ou « oreille » 34 déformable par pincement. Selon cet exemple de réalisation, le collier de sertissage 33 est positionné dans un espace 11 de la tête de butée 6 définissant une portée plane (figure 1a), et le verrouillage est obtenu par un pincement de « l'oreille » 34 qui entraîne une compression de l'embout cylindrique 10 sur le manchon 25 de la bague 20.

Selon le mode de réalisation représenté à la figure 7, le verrouillage est assuré au moyen d'un collier 35 à vis 36 positionné dans un espace 11 de la tête de butée 6 définissant une portée plane. Selon cet exemple, en outre, un évidement 37 apte à loger la vis 36 est ménagé dans la tête de butée 6, de façon à assurer un blocage en rotation du collier 35 et à faciliter ainsi les opérations de vissage et dévissage.

Les figures 8a et 8b représentent quant à elles un mode de réalisation selon lequel le verrouillage est assuré par clavetage de la bague 20 du boîtier électronique 1 et de la tête de butée 6 du corps de valve 3. Selon ce mode de réalisation, un insert annulaire 38, est surmoulé sur l'embout cylindrique 10 de la tête de butée 6, le dit insert, l'embout cylindrique 10 et le manchon 25 de la bague 20 étant percés d'un orifice radial apte à loger une goupille 39 assurant un verrouillage de la bague 20 et de la tête de butée 6.

Les figures 9a et 9b représentent un deuxième mode de réalisation selon lequel le verrouillage est assuré par clavetage. Selon ce mode de réalisation, un insert tubulaire rectiligne 40 est surmoulé sur l'embout cylindrique 10 de la tête de butée 6, et un alésage parallèle au dit insert est ménagé dans la platine 21 de la bague 20, de façon à permettre un verrouillage au moyen d'une agrafe 41 en forme de U adaptée pour que les branches de la dite agrafe viennent se loger respectivement dans l'insert 40 et dans l'alésage de la platine 21. De plus, l'insert 40 et l'alésage de la platine 21 sont ménagés de façon s'étendre dans un plan orthogonal à l'axe de la force centrifuge, de façon à minimiser la force d'arrachement de l'agrafe 41.

Les figures 10a-10b et 11 représentent, quant à elles, deux variantes de réalisation des moyens d'assemblage du boîtier électronique 1 et du corps de valve 3.

Selon le mode réalisation représenté aux figures 10a et 10b, un anneau 44, solidarisé par surmoulage, est disposé dans l'espace annulaire 4a ménagé dans la tête de butée 6, et adapté pour former une nervure annulaire en saillie à l'intérieur du dit espace annulaire.

De plus, le manchon 25" de la bague 20 présente une faculté de déformation élastique radiale conférée par des fentes longitudinales 43 s'étendant à partir de l'extrémité du dit manchon, apte à permettre le franchissement de la nervure annulaire 44 par l'organe de blocage 26" formé sur la dite extrémité de manchon et consistant en une dent asymétrique.

Selon le mode réalisation représenté à la figure 11, et en premier lieu, une chambre annulaire 45 est ménagée sur le pourtour de l'alésage longitudinal 4 au niveau du col 7 du corps de valve 3, la dite chambre et le dit col étant adaptés pour délimiter une épaisseur de matière conçue pour entraîner, par repoussage (fluage) de matière, un remplissage partiel 46 de la chambre annulaire 45 sous l'effet de la force exercée par une jante 27, lors du montage sur cette dernière de la valve de gonflage 2.

De plus, le manchon 25"' de la bague 20 présente une longueur adaptée pour que l'organe de blocage en translation 26"' ménagé au niveau de l'extrémité du dit manchon s'étende dans la chambre annulaire 45 de façon à être bloqué en translation dans cette dernière lors du repoussage de matière.

## Revendications

1. Unité électronique de mesure de paramètres de fonctionnement d'une roue de véhicule, comprenant :
• un boîtier électronique (1),
• une valve de gonflage (2) de type « snap-in », de solidarisation du boîtier électronique (1) sur une jante (27) de roue, comportant :
• un corps de valve (3) en un matériau élastomère, muni d'un alésage axial longitudinal (4) et destiné à s'étendre au travers d'un orifice (28) ménagé dans la jante (27), le dit corps de valve étant composé d'un tronc (5) déformable élastiquement et d'une tête (6) de butée contre la jante (27), séparée du tronc (5) par un col (7) adapté pour se positionner de façon étanche dans l'orifice (28) ménagé dans la dite jante,
• et une âme tubulaire creuse (15) en un matériau rigide, logeant un mécanisme d'obturation et de dimensions adaptées pour se loger dans l'alésage (4) du corps de valve (3) et s'étendre de part et d'autre dans le prolongement du dit corps de valve, la dite âme tubulaire étant constituée de deux tronçons longitudinaux (18, 19) agencés l'un par rapport à l'autre et relativement au corps de valve (3), de façon à autoriser une déformation élastique du tronc (5) apte à permettre le montage de la valve de gonflage (2) au travers de l'orifice (28) de la jante (27),
• et des moyens de solidarisation du boîtier électronique (1) et de la valve de gonflage (2),
la dite unité électronique étant **caractérisée en ce que** les moyens de solidarisation du boîtier électronique (1) et de la valve de gonflage (2) comprennent :
• une bague (20 ; 20') solidaire du boîtier électronique (1), adaptée pour être montée coulissante autour de la portion de l'âme tubulaire (15,19) s'étendant dans le prolongement de la tête de butée (6) du corps de valve (3), dans une position du boîtier électronique (1) où ce dernier s'étend dans le prolongement direct de la valve de gonflage (2),
• et des moyens d'assemblage (13, 14, 25, 26 ; 25", 26", 44 ; 25"', 26"', 45, 46) de la bague (20 ; 20') du boîtier électronique (1) sur la tête de butée (6) du corps de valve (3).

2. Unité électronique selon la revendication 1 **caractérisée en ce que** l'âme tubulaire (15) de la valve de gonflage (2) est constituée de deux tronçons longitudinaux solidarisés dans le prolongement l'un de l'autre au niveau du col (7) du corps de valve (3) :
• un premier tronçon longitudinal (18) solidarisé au corps de valve (3) à l'intérieur de l'alésage (4) de ce dernier, s'étendant dans le tronc (5) du dit corps de valve et dans le prolongement du dit tronc,
• et un second tronçon longitudinal (19) libre en translation à l'intérieur de l'alésage (4) du corps de valve (3), s'étendant dans la tête de butée (6) du dit corps de valve et dans le prolongement de la dite tête de butée.

3. Unité électronique selon la revendication 2 **caractérisée en ce que** le second tronçon longitudinal (19) de l'âme tubulaire (15) présente un diamètre externe inférieur à celui du premier tronçon longitudinal (18) de la dite âme tubulaire, adapté pour obtenir une solidarisation par emmanchement des dits tronçons longitudinaux.

4. Unité électronique selon l'une des revendications 2 ou 3 **caractérisée en ce que** l'alésage (4) du corps de valve (3) présente, à l'intérieur de la tête de butée (6), une section interne de dimensions adaptées pour ménager un espace annulaire (4a) autour du second tronçon longitudinal (19) de l'âme tubulaire (15).

5. Unité électronique selon l'une des revendications précédentes **caractérisée en ce que** les moyens d'assemblage de la bague (20) du boîtier électronique (1) sur la tête de butée (6) du corps de valve (3) comprennent :
• un manchon creux (25 ; 25' ; 25" ; 25"') solidaire de la bague (20 ; 20') du boîtier électronique (1), adapté pour pénétrer dans un espace annulaire (4a ; 13 ; 45) ménagé dans la tête de butée (6) autour de l'âme tubulaire (15),
• et des organes conjugués (14, 26 ; 26", 44 ; 26"', 46) de blocage relatif en translation de la bague (20 ; 20') relativement au corps de valve (3), ménagés sur le manchon (25 ; 25' ; 25" ; 25"') et formés dans l'espace annulaire (4a ; 13 ; 45) ménagé dans la tête de butée (6).

6. Unité électronique selon la revendication 5 **caractérisée en ce que** les moyens d'assemblage de la bague (20) du boîtier électronique (1) sur la tête de butée (6) du corps de valve (3) comprennent :
• une chambre annulaire (45) ménagée sur le pourtour de l'alésage longitudinal (4) au niveau du col (7) du corps de valve (3), adaptée pour délimiter, au niveau du dit col, une épaisseur de matière conçue pour entraîner, par repoussage de matière, un remplissage partiel (46) de la dite chambre annulaire, sous l'effet de la force exercée par une jante (27), lors du montage sur cette dernière du dit corps de valve,
• un manchon (25"') présentant une longueur adaptée pour que l'organe de blocage en translation (26"') du dit manchon s'étende dans la chambre annulaire (45) de façon à être bloqué en translation lors du repoussage de matière.

7. Unité électronique selon l'une des revendications précédentes **caractérisée en ce que** les moyens d'assemblage de la bague (20') du boîtier électronique (1) sur la tête de butée (6) du corps de valve (3) comprennent :
• un manchon creux (25') solidaire de la bague (20') du boîtier électronique (1), adapté pour pénétrer dans un espace annulaire (4a ; 13) ménagé dans la tête de butée (6) autour de l'âme tubulaire (15),
• et des organes conjugués (14, 26) de blocage relatif en rotation de la bague (20') relativement au corps de valve (3), ménagés sur le manchon (25') et sur l'âme tubulaire (15).

8. Unité électronique selon l'une des revendications 5 à 7 **caractérisée en ce que** la tête de butée (6) du corps de valve (3) comporte un logement annulaire externe (11) de positionnement d'un organe de serrage (12 ; 32 ; 33 ; 35) de la dite tête de butée sur le manchon creux (25 ; 25"') de la bague (20) du boîtier électronique (1).

9. Unité électronique selon l'une des revendications 1 à 7 **caractérisée en ce que** la tête de butée (6) du corps de valve (3) et la bague (20) du boîtier électronique (1) comportent des réservations complémentaires (38 ; 40) aptes à loger un organe de clavetage (39 ; 41) des dites tête de butée et bague.

10. Unité électronique selon l'une des revendications précédentes **caractérisée en ce que** boîtier électronique (1) et la bague (20) sont agencés de façon que le dit boîtier électronique soit incliné d'un angle de l'ordre de 10° à 40° par rapport à l'axe longitudinal du corps de valve (3).

## Claims

1. Electronic unit for measuring the operating parameters of a vehicle wheel, comprising:
• an electronic module (1),
• a snap-in type inflation valve (2) for attaching said electronic module (1) to a wheel rim (27), comprising:
• a valve body (3) in an elastomeric material, equipped with a longitudinal axial bore (4) and designed to extend through an opening (28) located in the wheel rim (27), said valve body being composed of an elastically deformable stem (5) and a stop head (6) against the wheel rim (27) separated from the stem (5) by a collar (7) adapted to be positioned in a sealed manner in the opening (28) located in said wheel rim,
• and a hollow tubular core (15) in a rigid material, housing a blocking mechanism sized such that it is adapted to be housed in the bore (4) of the valve body (3) and to extend on either side in the geometrical continuation of said valve body, said tubular core being comprised of two longitudinal sections (18, 19) arranged one in relation to the other and in relation to the valve body (3), so as to allow the elastic deformation of the stem (5) to enable the inflation valve (2) to be fitted through the opening (28) of the wheel rim (27),
• and attachment means for the electronic module (1) and inflation valve (2),
said electronic unit being **characterised in that** the attachment means of the electronic module (1) and the inflation valve (2) comprise:
• a ring (20; 20') fixed to the electronic module (1), designed to slide around the portion of the tubular core (15, 19) extending in a geometrical continuation of the stop head (6) of the valve body (3), in a position of the electronic module (1) where the latter extends in the direct geometrical continuation of the inflation valve (2),
• and assembly means (13, 14, 25, 26; 25", 26",44; 25"', 26"', 45, 46) of the ring (20;20') of the electronic module (1) on the stop head (6) of the valve body (3).

2. Electronic unit according to claim 1, **characterised in that** the tubular core (15) of the inflation valve (2) comprises two longitudinal sections fixed to the geometrical continuation on either side at the level of the collar (7) of the valve body (3) :
• a first longitudinal section (18) fixed to the valve body (3) inside the bore (4) of the latter, extending into the stem (5) of said valve body and in the geometrical continuation of said stem,
• and a second longitudinal section (19) free to move translationally inside the bore (4) of the valve body (3), extending in the stop head (6) of said valve body and in the geometrical continuation of said stop head.

3. Electronic unit according to claim 2 **characterised in that** the second longitudinal section (19) of the tubular core (15) presents an external diameter less than that of the first longitudinal section (18) of said tubular core, adapted to obtain a connection by joining said longitudinal sections.

4. Electronic unit according to claim 2 or 3 **characterised in that** the bore (4) of the valve body (3) presents, inside the stop head (6), an internal section with dimensions adapted to house an annular space (4a) around the second longitudinal section (19) of the tubular core (15).

5. Electronic unit according to one of the previous claims **characterised in that** the assembly means of the ring (20) of the electronic module (1) on the stop head (6) of the valve body (3) comprise:
• a hollow sleeve (25; 25'; 25"; 25"') fixed to the ring (20; 20') of the electronic module (1) adapted to penetrate into an annular space (4a; 13; 45) housed in the stop head (6) around the tubular core (15),
• and mating components (14, 26; 26", 44; 26"', 46) which block the translatory movement of the ring (20; 20') relative to the valve body (3) housed on the sleeve (25; 25'; 25"; 25"') and formed in the annular space (4a; 13; 45) housed in the stop head (6).

6. Electronic unit according to claim 5 **characterised in that** the assembly means of the ring (20) of the electronic module (1) on the stop head (6) of the valve body (3) comprise:
• an annular chamber (45) housed on the edge of the longitudinal bore (4) at the level of the collar (7) of the valve body (3), adapted to delimit, at the level of said collar, a thickness of material designed to cause, by pushing back the material, partial filling (46) of said annular chamber, under the effect of the force exerted by a wheel rim (27) during assembly on the latter of said valve body,
• a sleeve (25"') presenting a suitable length so that the component (26"') blocking the translatory movement of said sleeve extends into the annular chamber (45) such that it cannot be displaced when pushing back the material.

7. Electronic module according to one of the previous claims **characterised in that** the assembly means of the ring (20') of the electronic module (1) on the stop head (6) of the valve body (3) comprise:
• a hollow sleeve (25') fixed to the ring (20') of the electronic module (1) adapted to penetrate into an annular space (4a; 13) housed in the stop head (6) around the tubular core (15),
• and mating components (14, 26) which block the translatory movement of the ring (20') relative to the valve body (3), housed on the sleeve (25') and on the tubular core (15).

8. Electronic module according to one of claims 5 to 7 **characterised in that** the stop head (6) of the valve body (3) comprises an external annular housing (11) for positioning a clamping component (12; 32; 33; 35) of said stop head on the hollow sleeve (25; 25"') of the ring (20) of the electronic module (1).

9. Electronic module according to one of claims 1 to 7 **characterised in that** the stop head (6) of the valve body (3) and the ring (20) of the electronic module (1) comprise additional spaces (38; 40) capable of housing a key member (39; 40) of said stop head and ring.

10. Electronic module according to one of the previous claims **characterised in that** the electronic module (1) and the ring (20) are arranged such that said electronic module is tilted at an angle of approximately 10° to 40° in relation to the longitudinal axis of the valve body (3).

## Patentansprüche

1. Elektronische Einheit zur Messung von Betriebsparametern eines Fahrzeugrads, umfassend:
• ein Elektronikgehäuse (1),
• ein Aufblasventil (2) vom Typ "Snap-in" zur Befestigung des Elektronikgehäuses (1) auf einer Radfelge (27), umfassend:
• einen Ventilkörper (3) aus einem Elastomermaterial, der mit einer axialen Längsbohrung (4) ausgestattet ist und dazu bestimmt ist, sich durch eine Öffnung (28) zu erstrecken, die in der Felge (27) vorgesehen ist, wobei der Ventilkörper aus einem elastisch verformbaren Rumpf (5) und einem Kopf (6) für den Anschlag gegen die Felge (27) besteht, der vom Rumpf (5) durch einen Hals (7) getrennt ist, der angepasst ist, um sich dichtend in der Öffnung (28) zu positionieren, die in der Felge vorgesehen ist,
• und einen röhrenförmigen Hohlkern (15) aus einem starren Material, in dem ein Verschlussmechanismus untergebracht ist und der Abmessungen aufweist, die angepasst sind, um in die Bohrung (4) des Ventilkörpers (3) hineinzupassen und um sich auf beiden Seiten in der Verlängerung des Ventilkörpers zu erstrecken, wobei der röhrenförmige Kern von zwei Längsabschnitten (18, 19) gebildet wird, die zueinander und in Bezug auf den Ventilkörper (3) so angeordnet sind, dass sie eine elastische Verformung des Rumpfes (5) zulassen, die geeignet ist, die Befestigung des Aufblasventils (2) durch die Öffnung (28) der Felge (27) zu ermöglichen,
• und Mittel zum festen Verbinden des Elektronikgehäuses (1) und des Aufblasventils (2),
wobei die elektronische Einheit **dadurch gekennzeichnet ist, dass** die Mittel zum festen Verbinden des Elektronikgehäuses (1) und des Aufblasventils (2) umfassen:
• einen Ring (20; 20'), der mit dem Elektronikgehäuse (1) fest verbunden und angepasst ist, um gleitend um den Abschnitt des röhrenförmigen Kerns (15, 19) befestigt zu werden, der sich in der Verlängerung des Anschlagkopfs (6) des Ventilkörpers (3) erstreckt, in einer Position des Elektronikgehäuses (1), in der sich Letzteres in der direkten Verlängerung des Aufblasventils (2) erstreckt,
• und Mittel zum Anbringen (13, 14, 25, 26; 25", 26", 44; 25"', 26"', 45, 46) des Rings (20; 20') des Elektronikgehäuses (1) am Anschlagkopf (6) des Ventilkörpers (3).

2. Elektronische Einheit nach Anspruch 1, **dadurch gekennzeichnet, dass** der röhrenförmige Kern (15) des Aufblasventils (2) von zwei Längsabschnitten gebildet wird, die in der Verlängerung auf Höhe des Halses (7) des Ventilkörpers (3) fest miteinander verbunden sind:
• ein erster Längsabschnitt (18), der mit dem Ventilkörper (3) im Inneren der Bohrung (4) des Letzteren fest verbunden ist, und der sich im Rumpf (5) des Ventilkörpers und in der Verlängerung des Rumpfes erstreckt,
• und ein zweiter Längsabschnitt (19), der im Inneren der Bohrung (4) des Ventilkörpers (3) frei verschiebbar ist, und der sich im Anschlagkopf (6) des Ventilkörpers und in der Verlängerung des Anschlagkopfs erstreckt.

3. Elektronische Einheit nach Anspruch 2, **dadurch gekennzeichnet, dass** der zweite Längsabschnitt (19) des röhrenförmigen Kerns (15) einen Außendurchmesser aufweist, der kleiner ist als der des ersten Längsabschnitts (18) des röhrenförmigen Kerns, angepasst, um eine feste Verbindung durch Ineinanderfügen der Längsabschnitte zu erhalten.

4. Elektronische Einheit nach einem der Ansprüche 2 oder 3, **dadurch gekennzeichnet, dass** die Bohrung (4) des Ventilkörpers (3) im Inneren des Anschlagkopfs (6) einen Innenquerschnitt mit Abmessungen aufweist, die angepasst sind, um einen ringförmigen Raum (4a) rund um den zweiten Längsabschnitt (19) des röhrenförmigen Kerns (15) auszubilden.

5. Elektronische Einheit nach einem der vorhergehenden Ansprüche, **dadurch gekennzeichnet, dass** die Mittel zum Anbringen des Rings (20) des Elektronikgehäuses (1) am Anschlagkopf (6) des Ventilkörpers (3) umfassen:
• eine Hohlmuffe (25; 25'; 25"; 25"'), die mit dem Ring (20; 20') des Elektronikgehäuses (1) fest verbunden und angepasst ist, um in einen ringförmigen Raum (4a; 13; 45), der im Anschlagkopf (6) rund um den röhrenförmigen Kern (15) vorgesehen ist, einzudringen,
• und zugehörige Elemente (14, 26; 26", 44; 26"', 46) zum relativen Sperren des Rings (20; 20') in der Verschiebung in Bezug auf den Ventilkörper (3), die auf der Muffe (25; 25'; 25"; 25"') vorgesehen und im ringförmigen Raum (4a; 13; 45) gebildet sind, der im Anschlagkopf (6) vorgesehen ist.

6. Elektronische Einheit nach Anspruch 5, **dadurch gekennzeichnet, dass** die Mittel zum Anbringen des Rings (20) des Elektronikgehäuses (1) am Anschlagkopf (6) des Ventilkörpers (3) umfassen:
• eine ringförmige Kammer (45), die auf der Umrandung der Längsbohrung (4) auf Höhe des Halses (7) des Ventilkörpers (3) vorgesehen und angepasst ist, um auf Höhe des Halses eine Materialdicke zu begrenzen, die dafür ausgelegt ist, durch Zurückschieben von Material eine Teilfüllung (46) der ringförmigen Kammer, unter Einwirkung der Kraft, die von einer Felge (27) beim Befestigen des Ventilkörpers auf Letzterer ausgeübt wird, herbeizuführen,
• eine Muffe (25"'), die eine Länge aufweist, die angepasst ist, damit sich das Element zum Sperren der Muffe in der Verschiebung (26"') in der ringförmigen Kammer (45) erstreckt, so dass sie beim Zurückschieben von Material in der Verschiebung gesperrt wird.

7. Elektronische Einheit nach einem der vorhergehenden Ansprüche, **dadurch gekennzeichnet, dass** die Mittel zum Anbringen des Rings (20') des Elektronikgehäuses (1) am Anschlagkopf(6) des Ventilkörpers (3) umfassen:
• eine Hohlmuffe (25'), die mit dem Ring (20') des Elektronikgehäuses (1) fest verbunden und angepasst ist, um in einen ringförmigen Raum (4a; 13), der im Anschlagkopf (6) rund um den röhrenförmigen Kern (15) vorgesehen ist, einzudringen,
• und zugehörige Elemente (14, 26) zum relativen Sperren des Rings (20') in der Verschiebung in Bezug auf den Ventilkörper (3), die auf der Muffe (25') und auf dem röhrenförmigen Kern (15) vorgesehen sind.

8. Elektronische Einheit nach einem der Ansprüche 5 bis 7, **dadurch gekennzeichnet, dass** der Anschlagkopf (6) des Ventilkörpers (3) eine ringförmige Außenaufnahme (11) zur Anordnung eines Elements zum Festziehen (12; 32; 33; 35) des Anschlagkopfs auf der Hohlmuffe (25; 25"') des Rings (20) des Elektronikgehäuses (1) umfasst.

9. Elektronische Einheit nach einem der Ansprüche 1 bis 7, **dadurch gekennzeichnet, dass** der Anschlagkopf (6) des Ventilkörpers (3) und der Ring (20) des Elektronikgehäuses (1) komplementäre Aussparungen (38; 40) umfassen, die geeignet sind, ein Element zum Verkeilen (39; 41) des Anschlagkopfs und des Rings aufzunehmen.

10. Elektronische Einheit nach einem der vorhergehenden Ansprüche, **dadurch gekennzeichnet, dass** das Elektronikgehäuse (1) und der Ring (20) so angeordnet sind, dass das Elektronikgehäuse in einem Winkel von 10° bis 40° in Bezug auf die Längsachse des Ventilkörpers (3) geneigt ist.
